# EUROPEAN PATENT APPLICATION

(11) **EP 4 654 338 A1**
(43) Date of publication of application: **26.11.2025**
(21) Application number: 24775053.2
(22) Date of filing: 23.01.2024
(51) Int. Cl.: H01M 10/6556, H01M 10/42, H01M 50/204, A62D 1/00

(54) **BATTERY PACK**

(30) Priority: 20.03.2023 KR 20230035866
(71) Applicant: LG Energy Solution, Ltd., Seoul 07335 (KR)
(72) Inventor: HWANG, Sung Tack, Daejeon 34122 (KR)
(74) Representative: Plasseraud IP
(86) International application number: PCT/KR2024/001086
(87) International publication number: WO 2024/196005

(57) **Abstract**

Provided is a battery pack that is capable of efficiently performing cooling and extinguishing operations without reducing a space utilization.

A battery pack according to the present invention may include a battery module including a plurality of secondary batteries, a case in which a plurality of battery modules are accommodated, a cover coupled to the case, one or more cooling blocks which are disposed inside the cover and are in contact with the case to cool the battery modules, and a cooling pipe which is coupled to the cooling blocks and through which a coolant moves, wherein each of the cooling blocks may include a fire extinguishing liquid disposed in a space defined therein, and the fire extinguishing liquid may move into the cooling pipe at a preset temperature or more and is discharged to the outside of the cooling pipe.

## Description

### TECHNICAL FIELD

### CROSS-REFERENCE TO RELATED APPLICATION

The present application claims the benefit of the priority of Korean Patent Application No. 10-2023-0035866, filed on March 20, 2023, which is hereby incorporated by reference in its entirety.

### TECHNICAL FIELD

The present invention relates to a battery pack, and more particularly, to a battery pack including one or more secondary batteries that are chargeable and dischargeable.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries storing electrical energy may be generally classified into primary batteries and a secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged. When the oxidation reaction to the material is performed by the current, power is discharged. Such charging-discharging are repeatedly performed to generate electricity.

Secondary batteries may be classified into cylindrical cells, pouch cells, and prismatic cells according to their shape. Among them, the pouch cell may include an electrode assembly in which a positive electrode, a negative electrode, and a separator are stacked in the pouch.

The plurality of secondary batteries described above may be accommodated in a frame to constitute a battery module. In addition, the plurality of battery modules may be gathered together to provide a battery pack. Recently, as the need for large-capacity structures has increased in addition to the use as an energy storage source, the demand for a battery pack provided by aggregating a plurality of secondary cells or battery modules is increasing.

Since the battery pack is manufactured with the plurality of battery modules that are provided densely in a narrow space, a large amount of heat may be generated in each battery module, and the heat may generate flame in the battery module. In addition, the flame may be spread to the outside of the battery pack.

Thus, a configuration that is capable of reducing an internal temperature of the battery pack, which generates the large amount of heat, and a configuration that is capable of performing a function as fire extinguisher in the event of fire may be needed.

The battery pack according to the related art use a separate fire extinguishing device therein to reduce a space utilization of the battery pack and requires a separate space to reduce an energy capacity of the battery pack. In addition, there is a problem in which an entire space inside the battery pack is not managed from the fire. Furthermore, if the fire occurs in the battery pack, there is a problem in which spread of the fire is not sufficiently delayed.

Therefore, there is a need for a battery pack that is capable of efficiently cooling and extinguishing the fire without reducing the space utilization.

### DISCLOSURE OF THE INVENTION

### TECHNICAL PROBLEM

An object of the present invention is to provide a battery pack that is capable of efficiently performing cooling and extinguishing operations without reducing a space utilization.

### TECHNICAL SOLUTION

A battery pack according to the present invention may include a battery module including a plurality of secondary batteries, a case in which a plurality of battery modules are accommodated, a cover coupled to the case, one or more cooling blocks which are disposed inside the cover and are in contact with the case to cool the battery modules, and a cooling pipe which is coupled to the cooling blocks and through which a coolant moves, wherein each of the cooling blocks may include a fire extinguishing liquid disposed in a space defined therein, and the fire extinguishing liquid may move into the cooling pipe at a preset temperature or more and is discharged to the outside of the cooling pipe.

The cooling block may further include a connection part disposed between the fire extinguishing liquid and the cooling pipe.

The connection part may prevent the fire extinguishing liquid from being discharged to the cooling pipe at a temperature less than the preset temperature and provide a passage therein so that the fire extinguishing liquid is discharged toward the cooling pipe at the preset temperature or more.

The connection part may include refractory silicon.

The refractory silicon may be ceramized at the preset temperature or more to define a gap therein, and the fire extinguishing liquid may move into the cooling pipe through the gap.

The cooling pipe may include refractory silicon.

The refractory silicon may be ceramized at the preset temperature or more to define a gap in a surface thereof, and the fire extinguishing liquid may be discharged to the outside of the cooling pipe through the gap.

A position at which the cooling block is coupled to the cover may vary.

One or more blocking coupling grooves to which the cooling block is coupled may be defined in the cover.

The block coupling grooves may be defined by a first partition wall protruding upward from a bottom of the cover and a second partition wall protruding upward to intersect the first partition wall.

The first partition wall may be disposed perpendicular to the second partition wall.

Each of the first partition wall and the second partition wall may be provided in plurality, and the first partition wall and the second partition wall may intersect each other to define a plurality of block coupling grooves, and the cooling block may be coupled to one or more of the plurality of block coupling grooves.

The cooling pipe may include a first pipe part disposed outside the cooling block, and a second pipe part extending from the first pipe part and disposed inside the cooling block.

In the second pipe part, the coolant may be introduced into the second pipe part from the first pipe part through one end of the second pipe part, and the coolant may be discharged to the first pipe part through the other end of the second pipe part.

The second pipe part may have a partially bent shape between the one end and the other end.

The fire extinguishing liquid may move into the second pipe part at the preset temperature or more.

### ADVANTAGEOUS EFFECTS

The battery pack according to the present invention may include the battery module including the plurality of secondary batteries, the case in which the plurality of battery modules are accommodated, the cover coupled to the case, the one or more cooling blocks that are disposed inside the cover and are in contact with the case to cool the battery modules, and the cooling pipe which is coupled to the cooling blocks and through which the coolant moves, wherein each of the cooling blocks may include the fire extinguishing liquid disposed in the space defined therein, and the fire extinguishing liquid may move into the cooling pipe at the preset temperature or more and be discharged to the outside of the cooling pipe.

Thus, the heat of the battery pack may be reduced without reducing the space utilization of the battery pack.

In addition, in the event of the fire, the spread of the fire may be efficiently delayed or prevented.

In addition, the cooling blocks may be disposed at the various positions to manage the entire space inside the battery pack from the fire.

As a result, the stability of the battery pack may be improved.

The effects of the prevent invention are not limited by the aforementioned description, and thus, more varied effects are involved in this specification.

### BRIEF DESCRIPTION OF THE DRAWINGS

FIG. 1 is a schematic perspective view of a battery pack according to an embodiment of the present invention.
FIG. 2 is a schematic exploded perspective view of the battery pack according to an embodiment of the present invention.
FIG. 3 is a schematic cross-sectional view taken along line A-A' of FIG. 1.
FIG. 4 is a schematic enlarged perspective view illustrating a cooling block and a cooling pipe of the battery pack according to an embodiment of the present invention.
FIG. 5 is a schematic view illustrating a state in which a fire extinguishing liquid is discharged from the cooling block of the battery pack according to an embodiment of the present invention.
FIG. 6 is a schematic perspective view illustrating a cover of the battery pack according to an embodiment of the present invention.
FIG. 7 is a schematic enlarged perspective view a cooling block and a cooling pipe of a battery pack according to another embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

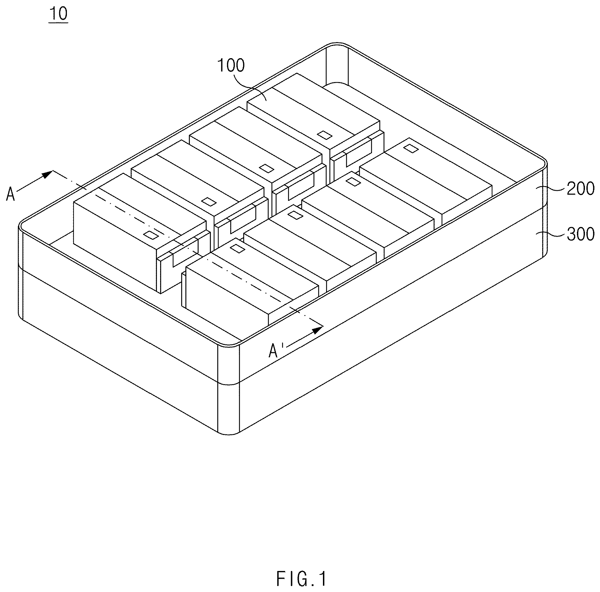

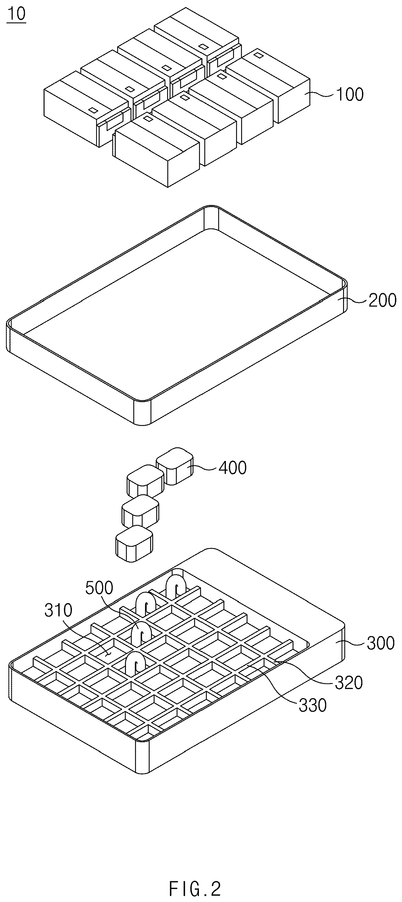

FIG. 1 is a schematic perspective view of a battery pack 10 according to an embodiment of the present invention, and FIG. 2 is a schematic exploded perspective view of the battery pack 10 according to an embodiment of the present invention.

A battery pack 10 according to an embodiment of the present invention may include a plurality of battery modules 100 therein. That is, the battery pack 10 may be provided by gathering one or more battery modules 100 including a plurality of secondary batteries to provide a large amount of electrical energy. The battery module 100 may include the plurality of secondary batteries. Here, each of the secondary batteries may be a pouch cell, a cylindrical cell, prismatic cell, etc. The battery pack may be provided by gathering the plurality of secondary batteries.

The battery pack 10 may include a case 200 as a configuration for accommodating the plurality of battery modules 100. The case 200 may surround the entire battery module 100 to protect the battery module 100 from external vibration or impacts. The case 200 may vary depending on a position at which the battery module 100 is disposed, types of other components provided in the battery pack 10, etc. However, in one embodiment of the present invention, the case 200 having a substantially rectangular parallelepiped shape will be described as an example.

Referring to FIG. 1, the plurality of battery modules 100 may be accommodated inside the case 200. The case 200 may include an upper case and a lower case for efficiency in manufacturing process of the battery pack 10. Thus, an arrangement of the battery module 100 and assembly of the case 200 may proceed more efficiently. The upper case will be omitted in FIGS. 1 and 2.

The battery pack 10 according to an embodiment of the present invention may further include a cover 300, a cooling block 400, and a cooling pipe 500 as an example of configurations for cooling and extinguishing.

Referring to FIGS. 1 and 2, the cover 300 may be disposed below the case 200, and the cooling block 400 may be disposed inside the cover 300. Specifically, the cover 300 may be coupled to a lower portion of the case 200, and the cooling block 400 may be disposed inside the cover 300 in a state of being in contact with the case 200 to cool the battery module 100 accommodated in the case 200. In addition, the cooling pipe 500 may be coupled to the cooling block 400 so that the cooling block 400 exerts a cooling effect.

The battery pack 10, which generates a large amount of heat, may require a cooling means to remove the heat. Thus, a coolant may move inside the cooling pipe 500 of the battery pack 10 according to an embodiment of the present invention.

The cooling pipe 500 may have a substantially tubular shape so that the coolant easily moves. Here, the cooling pipe 500 may have a partially bent shape to be efficiently coupled to the cooling block 400.

Here, the coolant flowing inside the cooling pipe 500 may be a material having fluidity to perform a cooling operation for cooling the heat. For example, the coolant may be a cooling water.

In the battery pack 10 according to an embodiment of the present invention, the cooling block 400 may exert the cooling effect as the coolant flows inside the cooling pipe 500 coupled to the cooling block 400. In addition, the cooling block 400 coupled to the cooling pipe 500 may be disposed to be in contact with the case 200, in which the battery module 100 is accommodated, thereby cooling the battery module 100.

The battery pack 10 may require a configuration for preventing spread of fire if the fire occurs due to the large amount of heat. Thus, the cooling block 400 of the battery pack 10 according to an embodiment of the present invention may include a fire extinguishing liquid 410.

An empty space may be defined inside the cooling block 400 to accommodate the fire extinguishing liquid 410. The fire extinguishing liquid 410 contained in an internal space of the cooling block 400 may move into the cooling pipe 500 at a preset temperature or more and then be discharged to the outside of the cooling pipe 500. Here, the preset temperature may mean a temperature at which there is a risk of problems of occurring in function of the battery pack 10 due to the fire.

In the battery pack 10 according to an embodiment of the present invention, the cooling block 400 may include the fire extinguishing liquid 410, and thus, the cooling block 400, which normally exerts the cooling effect, may also have a fire extinguishing function in the event of the fire.

Hereinafter, structures of the cooling block 400 and the cooling pipe 500 will be described in more detail.

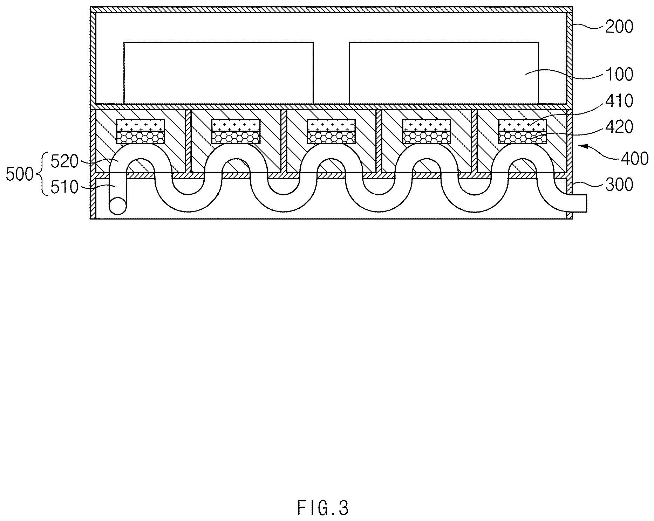

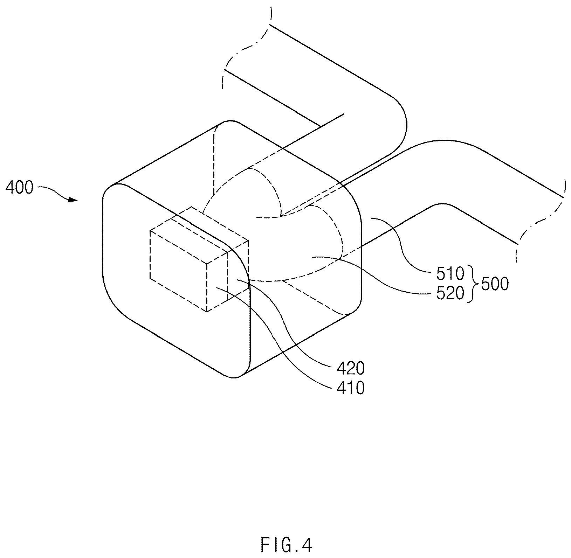

FIG. 3 is a schematic cross-sectional view taken along line A-A' of FIG. 1, and FIG. 4 is a schematic enlarged perspective view illustrating the cooling block 400 and the cooling pipe 500 of the battery pack 10 according to an embodiment of the present invention.

Referring to FIGS. 3 and 4, the cooling block 400 may further include a connection part 420 disposed between the cooling pipe 500 and the fire extinguishing liquid 410.

The connection part 420 of the cooling block 400 may prevent the fire extinguishing liquid 410 from being discharged into the cooling pipe 500 at a temperature less than the preset temperature and may provide a passage therein so that the fire extinguishing liquid 410 is discharged toward the cooling pipe 500.

The connection part 420 may normally block the space in which the fire extinguishing liquid 410 is accommodated so that the fire extinguishing liquid 410 accommodated inside the cooling block 400 does not leak to the outside. Thus, the connection part 420 may have a cross-sectional area that is the same as a cross-sectional area of the space in which the fire extinguishing liquid 410 is accommodated inside the cooling block 400.

Under the condition of the preset temperature or more, the passage may be provided inside the connection part 420, and the fire extinguishing liquid 410 contained inside the cooling block 400 may be transferred into the cooling pipe 500 by the passage provided inside the connection part 420. The detailed mechanism for this structure will be described later.

The cooling pipe 500 according to an embodiment of the present invention may include a first pipe part 510 and a second pipe part 520. Specifically, the first pipe part 510 may be disposed outside the cooling block 400, and the second pipe part 520 may be disposed inside the cooling block 400. Here, the second pipe part 520 may extend from the first pipe part 510 and be coupled to the inside of the cooling block 400.

The coolant may flow inside the first pipe part 510 and the second pipe part 520. Here, the coolant flowing inside the first pipe part 510 of the cooling pipe 500 may flow inside the second pipe part 520 to allow the cooling block 400 to perform the cooling function. Specifically, the coolant may be introduced to the inside through an end of the second pipe part 520 from the first pipe part 510 and may be discharged to the inside of the first pipe part 510 through the other end of the second pipe part 520.

The first pipe part 510 and the second pipe part 520 may be connected to each other so that the insides of the first pipe part 510 and the second pipe part 520 communicate with each other to allow the coolant to continuously flow. Specifically, the first pipe part 510 and the second pipe part 520 may have the same cross-sectional shape.

Referring to FIG. 4, the second pipe part 520 of the cooling pipe 500 may have a partially bent shape between one end and the other end thereof. Specifically, the second pipe part 520 may have an approximately U-shape. The second pipe part 520 having this shape may be easily coupled to the inside of the cooling block 400, and thus, internal resistance when the coolant flows may also be reduced.

The second pipe part 520 of the cooling pipe 500 may be in contact with the connection part 420. Here, the portion at which the second pipe part 520 is in contact with the connection part 420 may have a penetrated shape so that the fire extinguishing liquid 410 passing through the connection part 420 is introduced into the second pipe part 520 at the preset temperature or more.

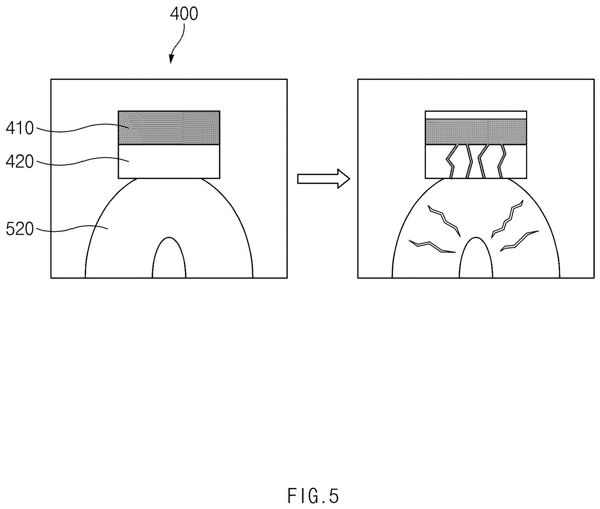

FIG. 5 is a schematic view illustrating a state in which the fire extinguishing liquid 410 is discharged from the cooling block 400 of the battery pack 10 according to an embodiment of the present invention.

As an example of the connection part 420 for providing the internal passage at the preset temperature or more, the connection part 420 according to an embodiment of the present invention may include refractory silicon. Specifically, the connection part 420 may be made of refractory silicon.

The refractory silicon may be fire resistance and be ceramized at the preset temperature or more. Here, fire resistance may refer to a property of being resistant to fire without being easily burned, and ceramization may refer to a state of hardening due to the heat. That is, the connection part 420 may be made of refractory silicon and be ceramized while resisting to the fire.

Referring to FIG. 5, the refractory silicon may be ceramized at the preset temperature or more to provide a gap therein, and the fire extinguishing liquid 410 may move into the cooling pipe 500 through the gap. Specifically, as the connection part 420 is hardened through the ceramization, the inside of the connection part 420 may be cracked, and thus, the fire extinguishing liquid 410 may flow into the cracked portion. That is, the gap in the connection part 420, which is the cracked portion, may serve as a passage through which the fire extinguishing liquid 410 moves into the cooling pipe 500.

In this regard, the fire extinguishing liquid 410 may move into the cooling pipe 500 through the second pipe part 520. For this movement, the connection part 420 inside the cooling block 400 may be disposed so that one side of the connection part 420 is in contact with the fire extinguishing liquid 410, and the other side of the connection part 420 is in contact with the second pipe part 520 of the cooling pipe 500.

Since a cooling block 400 of a battery pack 10 according to Embodiment 1 of the present invention includes a connection part 420, a fire extinguishing liquid 410 may be selectively discharged as necessary.

As an example of a cooling pipe 500 for defining a gap in a surface at the preset temperature or more, the cooling pipe 500 according to an embodiment of the present invention may include refractory silicon. Specifically, the cooling pipe 500 may be made of refractory silicon. As described above, the surface of the cooling pipe 500 may be made of refractory silicon and be ceramized while resisting to the fire.

Referring to FIG. 5, the cooling pipe 500 made of refractory silicon may be ceramized at the preset temperature or more to provide the gap therein, and the fire extinguishing liquid 410 moving from the cooling block 400 through the gap may be discharged to the outside of the cooling pipe 500. That is, when the temperature inside the battery pack 10 rises due to the fire to reach the preset temperature or more, the fire extinguishing liquid 410 contained inside the cooling block 400 may move into the second pipe part 520 through the gap of the connection part 420. The fire extinguishing liquid 410 that has moved into the second pipe part 520 may be discharged to the outside of the cooling pipe 500 through the gap in the first pipe part 510 or the second pipe part 520. The fire extinguishing liquid 410 discharged to the outside of the cooling pipe 500 may delay or prevent spread of the fire inside and outside the battery pack 10. Here, the coolant inside the cooling pipe 500 may also be released to aid the fire extinguishment.

The battery pack 10 according to an embodiment of the present invention may efficiently delay or prevent the spread of the fire because the fire extinguishing liquid 410 and the coolant are continuously supplied for a certain period of time when the fire occurs.

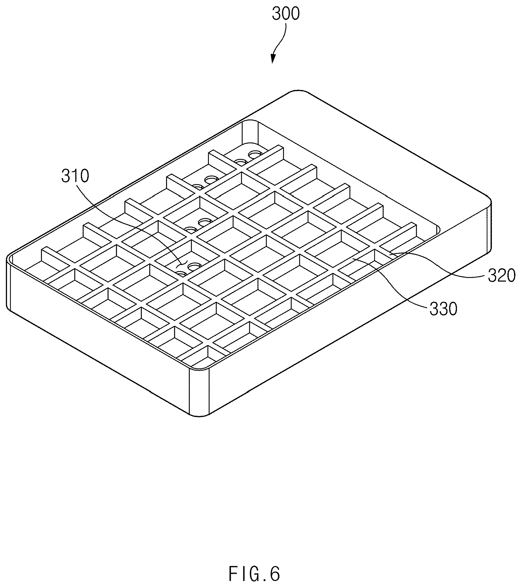

FIG. 6 is a schematic perspective view illustrating the cover 300 of the battery pack 10 according to an embodiment of the present invention.

As described above, the cover 300 may be coupled to the case 200. That is, the cover 300 may be coupled to a lower side of the case 200. However, the portion and method by which the cover 300 is coupled to the case 200 may vary.

The cooling block 400 of the battery pack 10 may be coupled to the cover 300 so as to be disposed inside the cover 300. Here, the position at which the cooling block 400 is coupled to the cover 300 may be variable. As an example of a configuration for this structure, one or more block coupling grooves 310 to which the cooling block 400 is coupled may be defined in the cover 300.

The block coupling grooves 310 may be defined by a first partition wall 320 and a second partition wall 330. For example, the first partition wall 320 may extend in a vertical direction from the bottom of the cover 300 to protrude upward. In addition, the second partition wall 330 may extend in a horizontal direction to intersect the first partition wall 320 so as to protrude upward. That is, the block coupling grooves 310 may be defined in a space generated by the first partition wall 320 and the second partition wall 330, which intersect each other.

The first partition wall 320 and the second partition wall 330 may be disposed to be perpendicular to each other in consideration of ease of manufacturing, ease of placement of the cooling block 400, etc. However, this is only an example, and the arrangement of the first partition 320 and the second partition 330 is not limited thereto.

Referring to FIG. 6, each of the first partition wall 320 and the second partition wall 330 may be provided in plurality, and the plurality of first partition walls 320 and the plurality of second partition walls 330 may intersect each other to provide a plurality of block coupling grooves 310.

In addition, one or more cooling blocks 400 may be coupled to at least one of the plurality of block coupling grooves 310. As described above, since the cooling block 400 is disposed in any block coupling groove 310 of the plurality of block coupling grooves 310, the cooling blocks 400 may be disposed at various positions depending on the arrangement shape of the battery module 100 stacked on the case 200. Thus, even if the battery module 100 is disposed at the various positions inside the case 200, the cooling block 400 may be disposed correspondingly to efficiently cool the battery module 100.

In order for the second pipe part 520 to be coupled to the inside of the cooling block 400 disposed in the block coupling groove 310, a hole may be defined in the bottom of the cover 300 corresponding to a lower portion of the block coupling groove 310. The hole may have the same cross-section as that of the cooling pipe 500. Thus, the second pipe part 520 of the cooling pipe 500 may pass through the bottom of the cover 300 through the hole and be coupled to the cooling block 400.

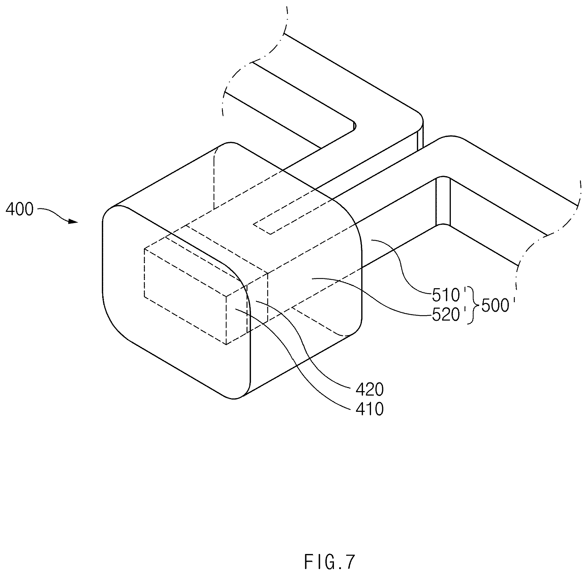

FIG. 7 is a schematic enlarged perspective view a cooling block 400 and a cooling pipe 500' of a battery pack according to another embodiment of the present invention.

The cooling pipe 500' of the battery pack according to another embodiment of the present invention may have a different shape from the cooling pipe 500 according to an embodiment. Specifically, shapes of a first pipe part 510' and a second pipe part 520' of the cooling pipe 500' may be different from those of the first pipe part 510 and the second pipe part 520 of the cooling pipe 500 according to an embodiment. More specifically, the first pipe part 510' may have a square cross-section, and the second pipe part 520' may have a large area so that a coolant flowing therein is in contact with a connection part 420 of the cooling block 400 with the large area.

Referring to FIG. 7, an entire surface of the connection part 420 of the cooling block 400 according to another embodiment of the present invention may be in contact with the coolant flowing inside the second pipe part 500'. Thus, a cooling effect of the cooling block 400 may be better, and it may be advantageous for the fire extinguishing liquid 410 to be introduced into the second pipe part 520' at a preset temperature or more.

In the battery pack 10 according to another embodiment of the present invention, the cooling block 400 may be disposed in all of block coupling grooves 310 defined in a cover 300. In this case, the largest number of cooling blocks 400 may be disposed on the widest area. Therefore, the widest area of the battery pack 10 may be cooled, and the fire extinguishing liquid 410 may perform an extinguishing operation the widest area when fire occurs.

While Embodiments of the present invention have been described with reference to the specific embodiments, it will be apparent to those skilled in the art that various changes and modifications may be made without departing from the spirit and scope of the invention as defined in the following claims.

### [Description of the Symbols]

10: Battery pack
100: Battery module
200: Case
300: Cover
310: Block coupling groove
320: First partition wall
330: Second partition wall
400: Cooling block
410: Fire extinguishing liquid
420: Connection part
500, 500': Cooling pipe
510, 510': First pipe part
520, 520': Second pipe part

## Claims

1. A battery pack comprising:
a battery module comprising a plurality of secondary batteries;
a case in which a plurality of battery modules are accommodated;
a cover coupled to the case;
one or more cooling blocks which are disposed inside the cover and are in contact with the case to cool the battery modules; and
a cooling pipe which is coupled to the cooling blocks and through which a coolant moves,
wherein each of the cooling blocks comprises a fire extinguishing liquid disposed in a space defined therein, and
the fire extinguishing liquid moves into the cooling pipe at a preset temperature or more and is discharged to the outside of the cooling pipe.

2. The battery pack of claim 1, wherein the cooling block further comprises a connection part disposed between the fire extinguishing liquid and the cooling pipe.

3. The battery pack of claim 2, wherein the connection part prevents the fire extinguishing liquid from being discharged to the cooling pipe at a temperature less than the preset temperature and provides a passage therein so that the fire extinguishing liquid is discharged toward the cooling pipe at the preset temperature or more.

4. The battery pack of claim 3, wherein the connection part comprises refractory silicon.

5. The battery pack of claim 4, wherein the refractory silicon is ceramized at the preset temperature or more to define a gap therein, and
the fire extinguishing liquid moves into the cooling pipe through the gap.

6. The battery pack of claim 1, wherein the cooling pipe comprises refractory silicon.

7. The battery pack of claim 6, wherein the refractory silicon is ceramized at the preset temperature or more to define a gap in a surface thereof, and
the fire extinguishing liquid is discharged to the outside of the cooling pipe through the gap.

8. The battery pack of claim 1, wherein a position at which the cooling block is coupled to the cover varies.

9. The battery pack of claim 1, wherein one or more blocking coupling grooves to which the cooling block is coupled are defined in the cover.

10. The battery pack of claim 9, wherein the block coupling grooves are defined by a first partition wall protruding upward from a bottom of the cover and a second partition wall protruding upward to intersect the first partition wall.

11. The battery pack of claim 10, wherein the first partition wall is disposed perpendicular to the second partition wall.

12. The battery pack of claim 10, wherein each of the first partition wall and the second partition wall is provided in plurality, and the first partition wall and the second partition wall intersect each other to define a plurality of block coupling grooves, and
the cooling block is coupled to one or more of the plurality of block coupling grooves.

13. The battery pack of claim 1, wherein the cooling pipe comprises:
a first pipe part disposed outside the cooling block; and
a second pipe part extending from the first pipe part and disposed inside the cooling block.

14. The battery pack of claim 13, wherein, in the second pipe part, the coolant is introduced into the second pipe part from the first pipe part through one end of the second pipe part, and the coolant is discharged to the first pipe part through the other end of the second pipe part.

15. The battery pack of claim 14, wherein the second pipe part has a partially bent shape between the one end and the other end.

16. The battery pack of any one of claims 13 to 15, wherein the fire extinguishing liquid moves into the second pipe part at the preset temperature or more.
